# EUROPEAN PATENT APPLICATION

(11) **EP 1 640 312 A1**
(43) Date of publication of application: **29.03.2006**
(21) Application number: 04746370.8
(22) Date of filing: 24.06.2004
(51) Int. Cl.: B66F 19/00

(54) **DEVICE AND METHOD OF TRANSPORTING AND INSTALLING COMPONENT**

(30) Priority: 01.07.2003 JP 2003189440; 01.07.2003 JP 2003189441; 01.07.2003 JP 2003189442
(71) Applicant: HONDA MOTOR CO., Ltd., Tokyo 107-8556 (JP)
(72) Inventor: OTAKE, Yoshito, c/o HONDA ENGINEERING CO., LTD, Sayama-shi, Saitama 350-1381 (JP); MIWA, Hiroshi, c/o HONDA ENGINEERING CO., LTD, Sayama-shi, Saitama 350-1381 (JP); YAMAMOTO, Tatsuhiko, c/o HONDA ENGINEERING CO. LTD, Sayama-shi, Saitama 350-1381 (JP)
(74) Representative: Rupp, Christian
(86) International application number: PCT/JP2004/008901
(87) International publication number: WO 2005/003015

(57) **Abstract**

In installation work of a door glass lifting/lowering regulator on amotor vehicle door, it is madepossible to respond appropriately to a production form, to quickly respond to emergencies including troubles, and to perform efficient transportation and installation work. A grip/installation mechanism 6 for gripping a door glass lifting/lowering regulator R and component transportation means 4 for moving the grip/installation mechanism 6 by an actuator are provided. First control means of performing drive and control so as to automatically transport the door glass lifting/lowering regulator R from a component supply position A to an installation position B for installation by automatically controlling the actuator of the component transportationmeans 4, and second control means of performing drive and control so as to reduce a burden on a worker by performing assist control of the actuator of the component transportation means 4 are provided. Further, mode switch means for performing switching between the first control means and the second control means is provided.

## Description

### Technical field

The present invention relates to the technology of installing components, such as a door glass lifting/lowering regulator, on receiving bodies, such as a motor vehicle door.

### Background Art

Heretofore, such technology of transporting and installing installed components, such as a door, to an installation position by using a reaction force imparting type work assisting device which reduces a burden as if a lightweight object were transported, so as to reduce a worker's burden when the installed components are heavy loads at the time of installing them one by one with transporting a receiving body such as a motor vehicle body, for example, in a vehicle assembling line and the like is known. (For example, refer to patent document 1: Japanese Patent Laid-open No. 2000-84881).

Such a reaction force imparting type work assisting device is an assist device which reduces a burden on a worker by supporting a heavy burden with a manipulator, detecting by a sensor the power which the worker applies to the heavy load indirectly, and controlling the manipulator on the basis of this information.

### Disclosure of the Invention

### Problems to be Solved by the Invention

However, there is a problem that it is not possible to perform efficient transportation and installation if installation work is performed in assist transportation wholly during work in the transportation and installation work using the above reaction force imparting type work assisting device.

In addition, there is a problem that a trouble arises depending on the contents of installation work, and that efficient work is not performed in the case of attempting automation including all the work up to installation.

Then, the present invention aims at preventing complication of a facility while attaining increase of work efficiency, and also making it possible to correspond easily also when a trouble and the like arise, when repeating such work that transports and installs installed components, to a receiving body which is given pitch feed.

### Means for solving the problem

In order to solve the above-mentioned subjects, the invention according to claim 1 provides a grip mechanism which grips an installed component, component transportation means of moving this grip mechanism with an actuator, first control means of controlling the actuator of this component transportation means according to a setting value and performing drive control so as to transport and install the installed component in the installation position, second control means of performing assist control of the actuator of the component transportation means, and performing drive control so as to reduce a burden of a worker performing operation in order to transport and install the installed component in the installation position, and mode switch means for switching the first control means and the second control means in a device which transports and installs an installed component in an installation position of a receiving body.

Then, as claim 2, when performing transportation and installation after selecting an actuator automatic control step of automatically transporting and installing an installed component in an installation position with controlling an actuator as set, and an actuator assist control step of reducing a burden of a worker, who performs transportation and installation operation of the installed component, by performs assist control of the actuator, at arbitrary time according to a work condition and the like, it is possible to work with responding adequately even when there is a change of a production form or the like, and it is possible to respond promptly even when abnormal circumstances such as a trouble arise.

In a component transportation and installation method including a step of installing an installed component, transported near an installation position, in a receiving body, the invention according to claim 3 positions an installed component in an installing section of a receiving body by operating the installed component transported near the installation position in an assist mode which can reduce a worker's burden, installs the positioned installed component in the receiving body automatically, and moves a grip mechanism, which grips the installed component after completion of installation to a predetermined position in an automatic mode.

Thus, it is possible to omit a complicated facility and the like for positioning by selecting the assist mode, in which a worker operates, without performing the work of positioning the installed component automatically, and when performing other transportation work and the like automatically, it is possible to work efficiently with a person and a machine coexisting.

The invention according to claim 4 provides a grip mechanism which can grip the installed component, component transportation means equipped with an actuator for transporting this grip mechanism, and an installation mechanism which can perform installation work in the state that the installed component is positioned in an installing section of the receiving body, and operation of the actuator of the component transportation means is made a switching type between an automatic mode which does not need a worker, and an assist mode which can reduce a worker's burden although a worker's intervention is needed, and control means performing control to select the assist mode when positioning at least the installed component is provided.

In a component transportation and installation method which is a component transportation and installation method of transporting an installed component in a component supply position toward an installation position with gripping it by a grip mechanism while conveying a receiving body, which is given pitch feed, to the installation position sequentially, returning the grip mechanism to the component supply position at the time of completion of installing the installed component in the receiving body, and repeating this, the invention according to claim 5 makes it free to perform switching between an automatic mode which does not need a worker, and an assist mode which can reduce a worker's burden although a worker's intervention is needed, as means of transporting the installed component, and simultaneously, performs switching to the automatic transportation mode after gripping the installed component by the grip mechanism and automatically transporting the installed component at least nearby the installation position, and makes the grip mechanism returned to the component supply position in the automatic mode when installation of the installed component is completed, and simultaneously, transports and installs at least two installed components in the installation position in a stop period of one pitch feed of the receiving body.

Thus, by making it free to perform switching between the automatic mode which does not need a worker, and the assist mode which can reduce a worker's burden although a worker's intervention is needed, as means of transporting the installed component, and performing at least movement between the component supply position and installation position, where there are few problems in transportation, in the automatic mode, it is possible to perform transportation efficiently and to reduce manpower. Then, the installed component transported near the installation position is positioned and installed in a predetermined position of the receiving body in the assist transportation mode or automatic mode.

In this case, when it is switched to the assistant transportation mode in the case that precise position harmony determination, an orientation change, or the like is included in, for example, installation work of the installed component for positioning, investigating, and determining the installed component, it is possible to work efficiently with securing a work space and making a person and a machine coexist in a state that a positioning facility of the installed component, and the like are omitted as much as possible.

Then, by transporting and installing at least two installed components in an installation position in a stop period of one pitch feed of the receiving body, it is possible to perform installation work more efficiently.

The invention according to claim 6 provides receiving body transportation means for performing pitch feed of the receiving body, a grip mechanism which grips the installed component in a component supply position, and component transportation means of transporting this grip mechanism at least to the installation position in an automatic transportation mode which does not need a worker, or an assist transportationmode which can reduce aworker s burden although a worker's intervention is needed, and returning in the automatic transportation mode or assist transportation mode to the component supply position when installation is completed, and performs control as the grip mechanism so as to transport at least two installed components in an installation position in a stop period of one pitch feed of the receiving body.

### Advantageous Effect of the Invention

According to the invention according to claims 1 and 2, a grip mechanism which grips an installed component, component transportation means of moving this grip mechanism with an actuator, first control means of controlling the actuator of this component transportation means according to a setting value and performing drive control so as to transport and install the installed component in the installation position, second control means of performing assist control of the actuator of the component transportationmeans, and performing drive control so as to reduce a burden of a worker performing operation in order to transport and install the installed component in the installation position, and mode switch means for switching the first control means and the second control means are provided. Hence, it is possible to work with responding adequately even when there is a change of a production form or the like, and it is possible to respond promptly even when abnormal circumstances such as a trouble arise.

According to the invention according to claims 3 and 4, it is made to position an installed component, transported near an installation position, in an installing section of a receiving body by operating it in the assist mode when installing the installed component positioned nearby the installation position, to install the positioned installed component in the receiving body automatically, and to make a grip mechanism, which grips the installed component after completion of installation, moved to a predetermined position in an automatic mode. Hence, it is possible to omit a complicated facility and the like for positioning, and it is possible to work efficiently with making a person and a machine coexist.

In such a transportation and installation method that transports and installs an installed component in a receiving body which is given pitch feed, according to the invention according to claims 5 and 6, it is made to make it free to perform switching between an automatic transportation mode and an assist transportation mode as means of transporting the installed component, to perform switching to the automatic transportation mode after gripping the installed component by the grip mechanism and to automatically transport the installed component at least nearby the installation position, and to make the grip mechanism returned to the component supply position in the automatic mode when installation of the installed component is completed, and simultaneously, to transport and install at least two installed components in the installation position in a stop period of one pitch feed of the receiving body. Hence, it is possible not only to omit a facility relating to transportation, but also to work efficiently.

### Brief Description of the Drawings

Figure 1 is an entire schematic diagram showing an example of applying a component carrier device according to the present invention to a motor vehicle door assembling line;
Figure 2 is a perspective view of component transportation means;
Figure 3 is a plan of a device base of the component transportation means;
Figure 4 is an explanatory diagram of a grip/installation mechanism of the component transportation means;
Figure 5 is an explanatory diagram of a door in view of an inner panel side;
Figures 6 (a) and 6 (b) are explanatory diagrams of a door glass lifting/lowering regulator, Figure 6(a) is an explanatory diagram of a back side, and Figure 6(b) is an explanatory diagram in view of a top side; and
Figures 7 (a) and 7 (b) are explanatory diagrams of states of assembling the door glass lifting/lowering regulator into a door inner panel, Figure 7 (a) is a state diagramwhen inserting the door glass lifting/lowering regulator into an aperture section of the inner panel, and Figure 7 (b) is a state diagram when rotating the door glass lifting/lowering regulator and fixing it to the inner panel after insertion.

### Best Mode for Carrying Out the Invention

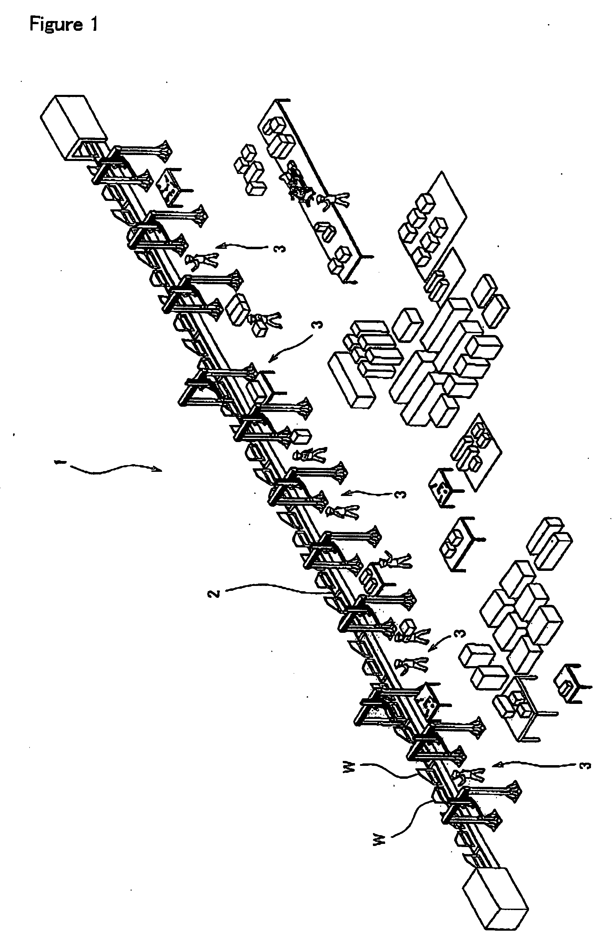

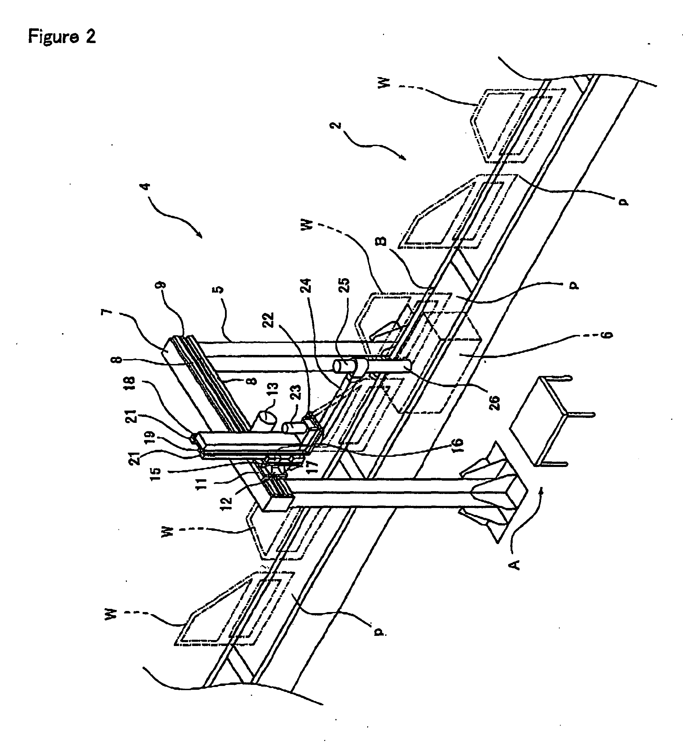

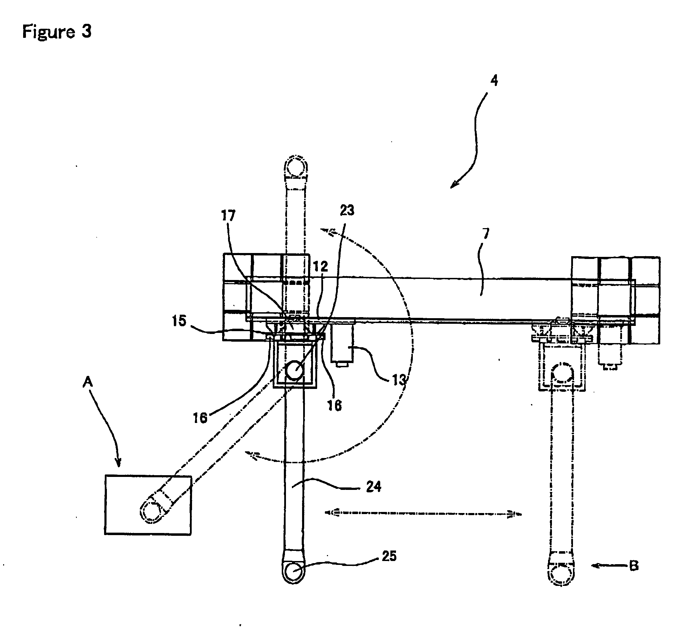

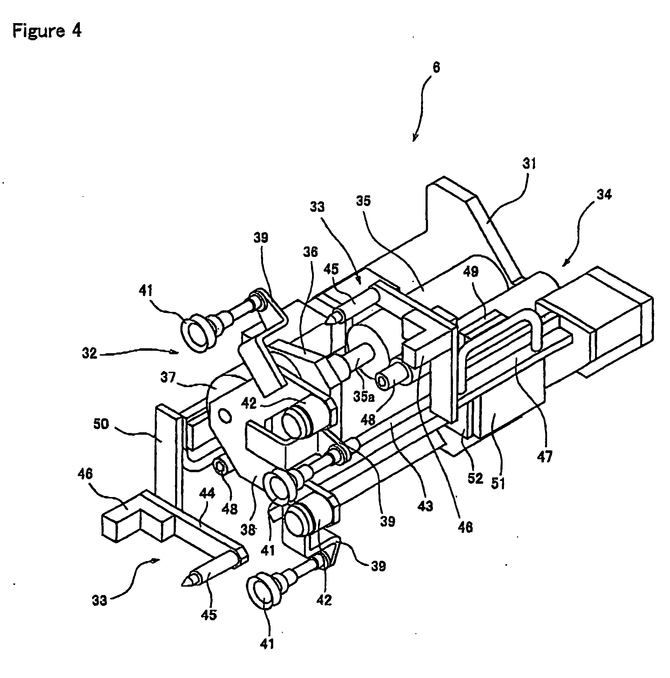

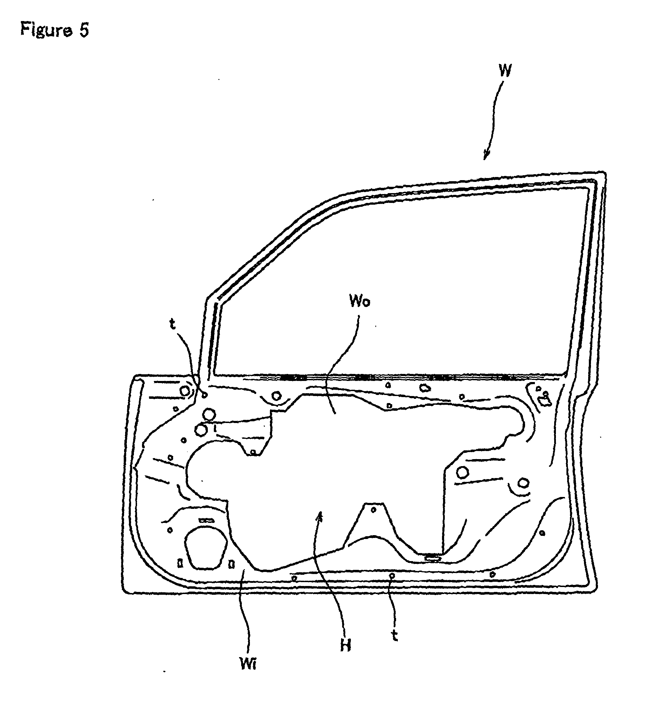

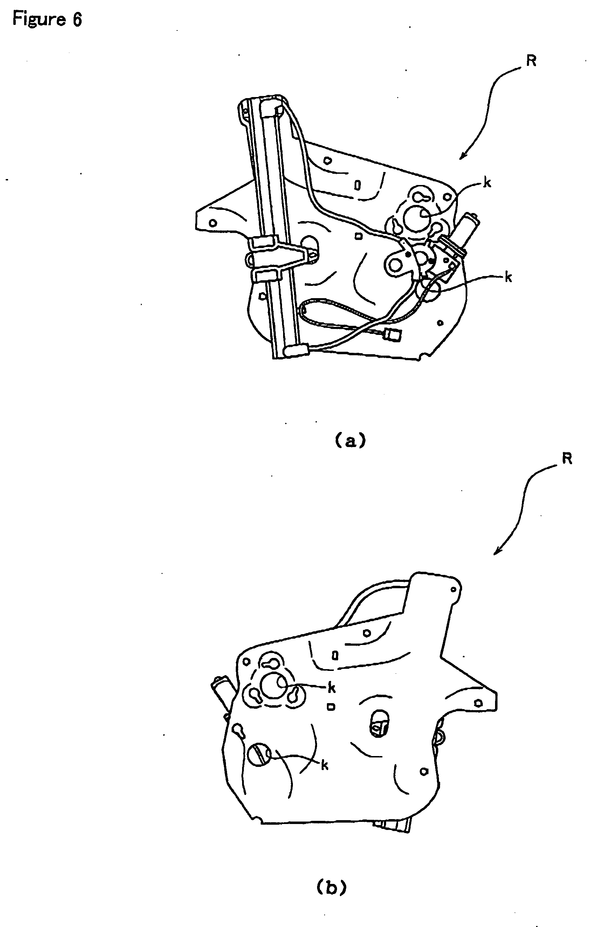

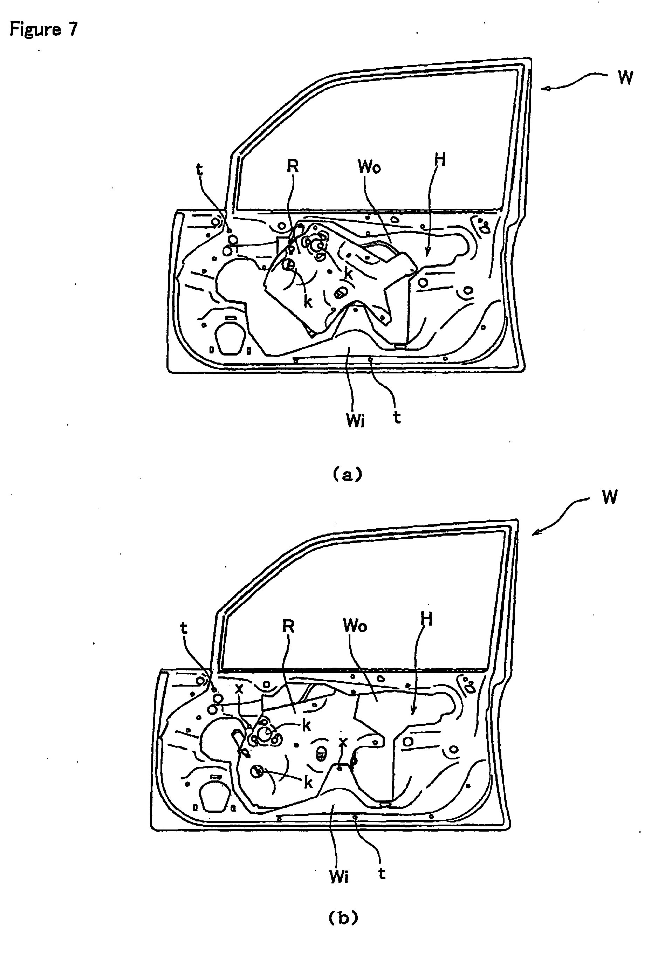

Embodiments of the present invention will be explained on the basis of attached drawings. Here, Figure 1 is an entire schematic diagram showing an example of applying a component carrier device according to the present invention to a motor vehicle door assembling line, Figure 2 is a perspective view of component transportation means, Figure 3 is a plan of a device base of the component transportation means, Figure 4 is an explanatory diagram of a grip/installation mechanism of the component transportation means, Figure 5 is an explanatory diagram of a door in view of an inner panel side, Figures 6 (a) and 6 (b) are explanatory diagrams of a door glass lifting/lowering regulator, Figure 6(a) is an explanatory diagram in view of aback side, and Figure 6 (b) is an explanatory diagram in view of a top side, and Figures 7 (a) and 7 (b) are explanatory diagrams of states of assembling the door glass lifting/lowering regulator into a door inner panel, Figure 7(a) is a state diagram when inserting the door glass lifting/lowering regulator into an aperture section of the inner panel, and Figure 7 (b) is a state diagram when rotating the door glass lifting/lowering regulator and fixing it to the inner panel after insertion.

A component transportation and installation method and its device which relate to the present invention are applied to an installation processing section of a door glass lifting/lowering regulator in a motor vehicle door assembling line, and are made possible to perform more efficiently work of transporting the door glass lifting/lowering regulator, existing in a component supply position, to an installation position, and work of installing it in a door according to a work condition and the like in the case that the door glass lifting/lowering regulator as an installed component is installed in a motor vehicle door as a receiving body which is given pitch feed.

That is, as shown in Figure 1, a motor vehicle door assembling line 1 provides a door transportation line 2 as receiving body transportation means for performing pitch feed of a motor vehicle door W, andapluralityof assembling sections 3 which are arranged sequentially from the upper stream of this door transportation line 2 to the lower stream, and makes it possible to assemble each assembled component to the door W in these assembling sections 3.

Then, a part of these assembling sections 3 are made a processing section for installing the door glass lifting/lowering regulator R as an installed component, and component transportation means 4 as shown in Figure 2 is provided in this processing section for installing the door glass lifting/lowering regulator R.

The above-mentioned door transportation line 2 is made to give pitch transportation to right side and left side doors W of the same vehicle as one set, which are placed in a rising state with being arranged in one row in a state that inner panel Wi sides are turned in the same direction on one rectangular pallet p (Figure 2), and then, a plurality of pallets p are adjacently arranged along the line, and are fed in a constant stroke simultaneously to be stopped for a certain period, and this is made to be repeated.

As shown in Figure 2, the above-mentioned component transportation means 4 provides a gate type device base 5 bridged over the door transportation line 2, and a grip/installation mechanism 6 which can move in multi-axial directions to this device base 5, and this grip/installation mechanism 6 is made not only to grip door glass lifting/lowering regulator R (Figure 6), but also to be movable between a component supply position A, arranged near the device base 5, and an installation positions B of the stopped door W.

That is, a pair of upper and lower slide rails 8 is provided in the single-sided side face of a beam member 7 which is an upper portion of the above-mentioned device base 5, and a rack 9 is provided between these slide rails 8.

Then, a slide table 12 slidably engages with these slide rails 8 through a slide guide 11, a first motor 13 as one of actuators is installed on this slide table 12, and a pinion gear driven by this first motor 13 overhangs on a back side of the slide table 12 to engage with the above-mentioned rack 9.

For this reason, the slide table 12 is movable to a crosswise direction with the operation of the first motor 13.

In addition, a support table 15 is installed on a surface of this slide table 12 through a mount, a second motor 17 as one of the actuators is installed on a back side of the support table 15 while a pair of slide guides 16 are provided on a front side of this support table 15, and a pinion gear is installed at its tip while a rotary shaft of this second motor 17 overhangs the front side of the support table 15. Then, this pinion gear engages with a rack 19 of a lifting table 18 described below.

The lifting table 18 is equipped with a pair of slide rails 21 slidably engaged with the slide guide 16 of the above-mentioned support table 15, and the rack 19 arranged between slide rails 21, and is enabled to move up and down by the operation of the above-mentioned second motor 17.

A stand 22 which projects forward is provided in a bottom end of this lifting table 18, and a third motor 23 as one of the actuators is provided on a top face of this stand 22. Then, an output shaft of this third motor 23 is connected through a gear to a base end section of a horizontal arm 24 projected from a lower part of the stand 22 horizontally and forward, and the horizontal arm 24 is made rotatable around a vertical shaft in the base end side by the drive of the third motor 23 as shown in Figure 3.

A fourth motor 25 as one of the actuators is installed on a top face in a tip side of the above-mentioned horizontal arm 24 in a rising state, and an output shaft of this fourth motor 25 is connected to a vertical arm 26 which exists in the lower.

Then, the vertical arm 26 is made rotatable by the drive of the fourth motor 25 around an axis.

In addition, the above-mentioned grip/installation mechanism 6 is mounted in a bottom end of this vertical arm 26.

Each of the actuators of the first to fourth motors 13, 17, 23, and 25 as mentioned above can be give switching control between an automatic transportation mode which does not need a worker's intervention, and an assist transportation mode which can reduce a worker's burden although a worker's intervention is needed. When a mode changeover switch is switched to the automatic transportation mode, the grip/installationmechanism 6 is automaticallymoved in a route the teaching of which was performed beforehand, and when being switched to the assist transportation mode, it is enabled to reduce a worker's burden when the worker moves the grip/installation mechanism 6 indirectly with an operating handle or the like.

Next, the grip/installation mechanism 6 will be explained.

As shown in Figure 4, the grip/installation mechanism 6 provides a device base table 31 connected to the above-mentioned vertical arm 26 through a bracket not shown, and a grip mechanism section 32 for gripping the door glass lifting/lowering regulator R, a positioning mechanism section 33 for positioning in the predetermined position of the door W, and a clamping mechanism section 34 for installing the door glass lifting/lowering regulator R in the door W are provided on this device base table 31. Then, the door glass lifting/lowering regulator R gripped by the grip mechanism section 32 is inserted into a space section between an inner panel Wi and an outer panel Wo through an aperture section H of the inner panel Wi of the door W as shown in Figure 5, and is positioned by the positioning mechanism section 33 to be fastened and fixed thereafter with bolts or the like by the clamping mechanism section 34.

The above-mentioned grip mechanism section 32 provides a first cylinder 35 installed in the front face of the above-mentioned device base table 31, a substrate 36 linked to a tip of a cylinder rod 35a of this first cylinder 35, a motor 37 installed in the front face of this substrate 36, and a table 38 installed on a rotary shaft in a front face side of this motor 37. A plurality of adsorption pads 41 and a plurality of boss locating pins 42 are installed to this table 38 through respective brackets 39, and this boss locating pin 42 is enabled to be inserted into a guide hole k of the door glass lifting/lowering regulator R (Figure 6 (b)). In addition, while a slide rail not shown is provided in a side section of the above-mentioned substrate 36, this slide rail is slidably fit to a slide guide 43 extended from a front face of the device base table 31.

For this reason, the substrate 36 is slidable in a direction perpendicular to a surface of the device base table by the operation of the first cylinder 35, and, the table 38 is rotatable by a predetermined angle by the operation of the motor 37.

Then, it is made possible to grip the door glass lifting/lowering regulator R by making the adsorption pads 41 adsorb a surface of a plate section (surface in Figure 6 (b)) of the door glass lifting/lowering regulator R in the state of inserting the boss locating pins 42 into the guide holes k of the door glass lifting/ lowering regulator R. In addition, it is made possible to change the attitude of door glass lifting/lowering regulator R to installation attitude after inclining and inserting the door glass lifting/lowering regulator R in the attitude of not interfering with a circumference of the aperture section H of the inner panel Wi by the motor 37.

As for the above-mentioned positioning mechanism section 33, a support member 44 is installed through a bracket 50 in an end section of a post 47 extending from a front face of the device base table 31, and a boss pin 45 for insertion into an inner panel guide hole, and an inner panel abutting member 46 which abuts on a predetermined part of the inner panel and is made of resin or rubber are installed on this supporting member 44. Then, a pair of these positioning mechanism sections 33 is provided in the state of sandwiching the grip mechanism section 32.

Then, it is made that the alignment of the door W with the grip/installation mechanism 6 is performed by making the inner panel abutting member 46 abut on the inner panel Wi in a predetermined location at the same time when the boss pins 45 of these positioning mechanism sections 33 are inserted into the guide holes t of the inner panel (Figure 5).

The above-mentioned clamping mechanism section 34 provides a nut runner 48 slidably engaging through a slide guide with a slide rail which is not shown in a drawing and is formed on a side face of the post 47 fixed to a side of the device base table 31, and a second cylinder 51 for making this nut runner 48 advance and retreat toward the inner panel Wi, and this second cylinder 51 is connected through a connection member 52 to the table 49 with the slide guide which is integrated with the side of the nut runner 48.

Then, the nut runner 48 is made to advance and retreat toward the inner panel Wi by expansion and contraction of the second cylinder 51.

In addition, a pair of these nut runners 48 is also provided.

Then, when the door glass lifting/lowering regulator R is positioned in installation attitude, the nut runner 48 moves forward and fixation is made to perform by bolting.

Furthermore, an operating handle and a deadman switch, which are not shown, for a worker performing movement in the assist transportation mode are provided in the above grip/installation mechanisms 6. When a worker pushes the operating handle in a direction, to which he/she wants to move, with grasping the deadman switch, it is switched from the automatic transportation mode to the assist transportation mode, and it is made possible to perform transportation by light power. When the worker moves his/her hand from the deadman switch, it is made to change to the automatic transportation mode.

Next, the outline of operation at the time of installing the door glass lifting/lowering regulator R in the motor vehicle door W will be explained.

When the pair of right and left doors Ware given pitch feed along the door transportation line 2, in connection with this, the door glass lifting/lowering regulator R is automatically transported by the component transportation means 4 to the installation position B. That is, when the grip/installation mechanism 6 grips the door glass lifting/lowering regulator R in the component supply position A, the automatic transportation is performed to a predetermined point near the installation position B according to the set route set in the automatic transportation mode.

Here, the grip of the door glass lifting/lowering regulator R by the grip/installation mechanism 6 may be sufficient in either case of the grip in the automatic mode or the grip in the assist mode.

When it reaches the predetermined point near the installation position B, a mode of each actuator changes to the assist transportation mode by the control means. For this reason, by continuously pushing the operating handle in a direction, to which he/she wants to move it, with grasping the deadman switch of the grip/installation mechanism 6, a worker moves the grip/installation mechanism to the installation position B. Then, when it passes the aperture section H of the inner panel Wi of the door W, as shown in Figure 7(a), he/she inclines and inserts the door glass lifting/lowering regulator R in the attitude of not interfering with a circumference of the aperture section H with operating another switch.

Then, after the above-mentioned passing work of the aperture section H, positioning is performed by making the inner panel abutting member 4 6 abut on a surface of the inner panel Wi at the same time of inserting the boss pin 45 of the positioning mechanism section 33 into the guide hole in the predetermined location of the inner panel Wi until a boss section abuts on its surface. Then, by return the inclination of the door glass lifting/lowering regulator R and moving it toward the inner panel Wi a little, the door glass lifting/lowering regulator R is made to abut on the inner panel Wi.

Subsequently, the nut runner 48 in the state of mounting a bolt advances toward the inner panel Wi to insert the bolt through a bolt hole x of the inner panel Wi. Then, when being fastened and fixed to a nut which is mounted on the door glass lifting/lowering regulator R, it is installed in the state as shown in Figure 7(b).

When the installation work to one of the right and left doors W is completed, the worker moves his/her hand from the deadman switch. Then, the operation mode of the grip/installation mechanism 6 changes to the automatic transportation mode, and the grip/installation mechanism 6 moves to the component supply position A automatically with following a defined route. After that, with gripping a next door glass lifting/lowering regulator R, it performs automatic transportation in the same procedure nearby the installation position B. Then, when the transportation is performed to a predetermined point, the mode changes to the assist transportation mode in the same procedure as the above description, and installation is performed in the same procedure to another of the right and left doors W. Then, transportation of the door transportation line 2 is kept stopped until the installation to two doors W is completed. When the installation to the two doors W is completed, the next pallet p (door W) comes by pitch transportation.

Although the above work is usually general work procedure, depending on a production form, it is always possible to change the automatic transportationmode to the assist transportation mode, or to change the assist transportation mode to the automatic transportation mode. Hence, it is possible to perform extremely efficiently such work that the door glass lifting/lowering regulator R is installed to the door W.

In addition, since the positioning is performed in the assist mode when the door glass lifting/lowering regulator R is installed to the door W in the above procedure, it is possible to perform it extremely efficiently, and to omit a complicated facility relating to transportation as much as possible. And also, it is possible to secure a work space, and to work efficiently.

Furthermore, if a certain trouble arises during work in the automatic transportation mode, it is possible to perform transportation between all the points in the assist mode by switching a control switch to the assist mode. At this time, impedance setting at the time of returning the component transportation means 4 to a defined point or area in the automatic transportation mode is performed automatically.

Moreover, the present invention is not limited to the embodiments like the above. What has the same construction substantially as the items described in the appended claims of the present invention and demonstrates the same operation and effect belongs to the technical scope of the present invention.

For example, the receiving body is not limited to the door W, and the installed component is not limited to the door glass lifting/lowering regulator R.

In addition, it is also good to adopt the automatic mode also with including installation work.

### Industrial Applicability

According to the present invention, it is possible to work with responding adequately even when there is a change of a production form or the like, and it is possible to respond promptly even when abnormal circumstances such as a trouble arise.

In addition, it is possible to omit a complicated facility and the like for positioning, and it is possible to work efficiently with making a person and a machine coexist.

Furthermore, it is possible not only to omit a facility relating to transportation, but also to work efficiently.

### Description of Symbols

- 1: ... MOTOR VEHICLE DOOR ASSEMBLING LINE
- 2: ... DOOR TRANSPORTATION LINE
- 4: ... COMPONENT TRANSPORTATION MEANS
- 6: ... GRIP/INSTALLATION MECHANISM
- A: ... COMPONENT SUPPLY POSITION
- B: ... INSTALLATION POSITION
- R: ... DOOR GLASS LIFTING/LOWERING REGULATOR
- W: ... DOOR

## Claims

1. A component transportation and installation device which is a device which transports and installs an installed component in an installation position of a receiving body, **characterized by** providing: a grip mechanism which grips an installed component; component transportation means of moving this grip mechanism with an actuator; first control means of controlling the actuator of this component transportation means according to a set value and performing drive control so as to transport and install the installed component in the installation position; second control means of performing assist control of the actuator of the component transportation means, and performing drive control so as to reduce a burden of a worker performing operation in order to transport and install the installed component in the installation position; and mode switch means for switching the first control means and the second control means.

2. A component transportation and installation method which is a method of transporting and installing an installed component in an installation position of a receiving body using component transportation means having at least an actuator for transportation, **characterized by** performing transportation and installation by selecting an actuator automatic control step of automatically transporting and installing the installed component in the installation position with controlling the actuator according to a set value, or an actuator assist control step of reducing a burden of a worker, who performs transportation and installation operation of the installed component, by performs assist control of the actuator, at arbitrary time according to a work condition and the like.

3. A component transportation and installation method which is a component transportation and installation method including a step of installing an installed component, transportednear an installation position, in a receivingbody, **characterized by** providing: a step of positioning the installed component in the installing section of the receiving body by operating the installed component transported near the installation position in an assist mode which can reduce a worker's burden; a step of installing the positioned installed component in the receiving body automatically; and a step of moving a grip mechanism, which grips the installed component after completion of installation, to a predetermined position in an automatic mode.

4. A component transportation and installation device which is a transportation and installation device for installing an installed component in a receiving body, **characterized by** comprising: a grip mechanism which can grip the installed component; component transportation means equipped with an actuator for transporting this grip mechanism; and an installation mechanism which can perform installation work in a state that the installed component is positioned in an installing section of the receivingbody, and in that operation of the actuator of the component transportation means is made a switching type between an automatic mode which does not need a worker, and an assist mode which can reduce a worker's burden although a worker's intervention is needed; and that control means performing control to select the assist mode when positioning at least the installed component is provided.

5. A component transportation and installation method which is a component transportation and installation method of transporting an installed component in a component supply position toward an installation position with gripping it by a grip mechanism while conveying a receiving body, which is given pitch feed, to the installation position sequentially, returning the grip mechanism to the component supply position at the time of completion of installing the installed component in the receiving body, and repeating this, **characterized by**: making it free to perform switching between an automatic mode which does not need a worker, and an assist mode which can reduce a worker's burden although a worker's intervention is needed, as means of transporting the installed component, and simultaneously; performing switching to the automatic transportation mode after gripping the installed component by the grip mechanism and automatically transporting the installed component at least nearby the installation position; and making the grip mechanism returned to the component supply position in the automatic mode when installation of the installed component is completed; and simultaneously transporting and installing at least two installed components in the installation position in a stop period of one pitch feed of the receiving body.

6. A component transportation device which is a device for transporting and installing an installed component in a receiving body which is given pitch feed, **characterized by** comprising: receiving body transportation means for performing pitch feed of the receiving body; a grip mechanism which grips the installed component in a component supply position; and component transportation means of transporting this grip mechanism at least to the installation position in an automatic transportation mode which does not need a worker, or an assist transportation mode which can reduce a worker's burden although a worker's intervention is needed, and returning it in the automatic transportation mode or assist transportation mode to the component supply position when installation is completed, and in that the grip mechanism is controlled so as to transport at least two installed components in an installation position in a stop period of one pitch feed of the receiving body.
